Europäisches Patentamt

European Patent Office

Office européen des brevets

(11) Numéro de publication: **0 052 174**
**B1**

(12) **FASCICULE DE BREVET EUROPEEN**

(45) Date de publication du fascicule du brevet: **19.09.84**

(21) Numéro de dépôt: **80870048.8**

(22) Date de dépôt: **18.11.80**

(51) Int. Cl.³: **B 01 D 25/34**

(54) **Filtre-presse.**

(43) Date de publication de la demande:
**26.05.82 Bulletin 82/21**

(45) Mention de la délivrance du brevet:
**19.09.84 Bulletin 84/38**

(84) Etats contractants désignés:
**AT BE CH DE FR GB IT LI NL SE**

(56) Documents cités:
**DE-C- 501 079**
**FR-A-1 463 286**
**US-A-3 647 082**

(73) Titulaire: **Parmentier, Alfred Henri**
**69, Boulevard Edmond Machtens B6**
**B-1080 Bruxelles (BE)**

(72) Inventeur: **Parmentier, Alfred Henri**
**69, Boulevard Edmond Machtens B6**
**B-1080 Bruxelles (BE)**

Courier Press, Leamington Spa, England.

## Description

La présente invention est relative à un filtre-presse à axe horizontal comprenant, dans une ossature de résistance, une pluralité de plateaux verticaux mobiles dans la direction dudit axe et portant un tissu filtrant sur chaque face.

Les filtre-presses à axe horizontal connus, comportant des cadres simples et des plateaux ont comme défauts:

\*\*l'emploi d'une main d'oeuvre importante;

\*\*l'absence de lavage des tissus, d'où leur colmatage et de lavage des surfaces de contact entre plateaux et cadres, cause d'inétanchéité du filtre;

\*\*l'absence d'un automatisation adéquate.

Ces inconvénients conduisent à des pertes importantes de temps et d'efficacité. Divers perfectionnements ont été apportés à ces filtres-presses, notamment: mécanisation de l'ouverture du filtre, utilisation de plateaux chambrés et d'une membrane gonflante par plateau chambré.

On connait aussi un filtre-presse à plateaux chambrés dont les chambres sont séparées par une plaque métallique, sur laquelle viendraient se coller les gâteaux de filtration.

Les dites plaques étant alors descendues verticalement sous le filtre, la décharge des gâteaux est possible.

Il est connu aussi voir: FR—A—1323483, pour des filtres à plateaux et cadres simples, qu'après filtration, ces cadres contenant les gâteaux sont descendus par paires, en deux temps, verticalement sous le filtre et déchargés par des moyens divers.

Dans tous ces filtres connus, les tissus et les surfaces de contact ne sont pas lavés. La main d'oeuvre reste importante.

Un premier objectif de la présente invention est de sortir horizontalement, automatiquement, les cadres composites du filtre, tous en même temps, en conservant entr'eux et avec les plateaux, un parallélisme parfait.

Un deuxième objectif est de pousser automatiquement tous les gâteaux à la fois, hors des cadres composites sortis.

Un troisième objectif est de laver les tissus et les surfaces de contact, pour éviter le colmatage des tissus et l'inétanchéité du filtre.

Un quatrième objectif est d'automatiser totalement le filtre, pour une utilisation effective maximum, avec peu de main d'oeuvre.

Le filtre-presse à axe horizontal selon le préambule de la revendication 1, est essentiellement caractérisé en ce que, entre les deux plateaux de chaque paire de plateaux adjacents est inséré un cadre composite mobile dans la direction de l'axe précité et perpendiculairement à cet axe, ce cadre composite étant constitué par l'assemblage d'un premier cadre simple, d'une première membrane expansible, d'une chambre centrale, d'une seconde membrane expansible et d'un second cadre simple, en ce que les plateaux et les cadres composites sont munis chacun d'au moins deux coussinets fermés pouvant coulisser sur des barres ou tirants de guidage horizontaux, de manière à maintenir en permanence ces plateaux et ces cadres composites verticaux et parallèles entre eux, les barres sur lesquelles peuvent coulisser les coussinets fermés portés par les cadres composites étant fixés à des montants mobiles dans une direction perpendiculaire à l'axe du filtre depuis une première position où les cadres composites sont insérés entre les plateaux jusqu'à une seconde position où les cadres composites sont entièrement sortis du filtre et où les deux gâteaux de filtration que contient chaque cadre composite sont expulsés par l'expansion des deux membranes de chaque cadre composite, ainsi que depuis la seconde position précitée jusqu'à la première précitée, et en ce qu'au moins une tuyauterie perforée est fixée à chaque cadre composite pour permettre le lavage des tissus filtrants des plateaux, tandis qu'au moins un pulvérisateur de liquide est fixé au-dessus ou en dessous de chaque plateau de manière à permettre le lavage des surfaces de contact des cadres composites.

Dans une forme de réalisation particulière du filtre-presse suivant l'invention, lesdits montants mobiles sont munis à leurs extrémités de blocs de glissement pouvant glisser dans des traverses fixes sous l'effet d'un vérin à double effet permettant de sortir la pluralité de cadres composites du filtre et de ramener cette pluralité de cadres composites dans le filtre.

Selon des particularités du filtre-presse selon l'invention, lesdites tuyauteries perforées sont chacune fixées à chaque cadre composite sur le côté de celui-ci le plus proche de l'axe du filtre, lorsque ce cadre composite a été amené dans ladite seconde position, tandis que les pulvérisateurs de liquide sont montés au voisinage du côté de chaque plateau, qui est le plus proche du cadre composite adjacent à ce plateau, lorsque ce cadre composite est dans ladite second position, au-dessus et/ou en dessous de chaque plateau.

D'autres particularités et détails de l'invention ressortiront de la description suivante, dans laquelle il est fait référence aux dessins ci-annexés:

—Fig 1: vue en élévation du filtre fermé:

—Fig 2: section selon la ligne II—II de la Fig 1, la partie de gauche en traits pleins montrant les éléments constitutifs du filtre fermé, tandis que la partie de droite en pointillé montre des éléments constitutifs sortis du filtre;

—Fig 3: section verticale dans un cadre composite.

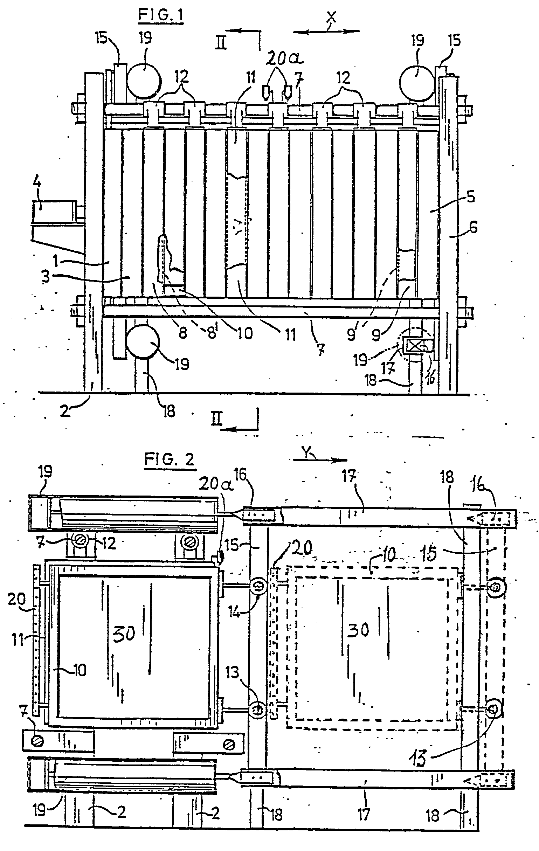

Comme montré aux Fig 1 et 2, le filtre-presse comprend une première plaque de résistance fixe 1 sur pieds 2, une plaque 3 mobile dans les directions de la flèche X par un vérin hydraulique 4 double effet ou un vérin mécanique et une seconde plaque de résistance 5 sur pieds fixes 6.

Des tirants supérieurs 7 maintiennent à distance les plaques 1 et 5, et contribuent à la résistance de l'ensemble à la pression de filtration et supportent les plateaux.

Ces tirants, ainsi que des tirants 7 inférieurs s'étendent parallèlement à l'axe longitudinal du filtre, mais sont situés, contrairement aux filtres connus, au-dessus et en dessous des plaques 1 à 5, pour conserver libres les côtés du filtre, en vue de la sortie latérale des cadres composites du filtre. Auprès de ces plaques viennent des plateaux à une seule face utile (plateaux 8 et 9. Faces 8' et 9').

Entr'eux viennent successivement un cadre composite 10, un plateau 11 à deux faces utiles, un cadre composite 10 . . . Chaque face de plateau est recouverte de tissu filtrant.

Les plateaux 11 sont seuls suspendus aux tirants 7 supérieurs, par des coussinets précis fermés 12 glissant sur les dits tirants et tels que les plateaux sont maintenus parallèlement dans le plan vertical, sans pouvoir basculer lors du déplacement des plateaux dans l'axe du filtre.

Les cadres 10 portent sur un côté des coussinets précis et fermés 13 pouvant glisser sur des barres 14 fixées par chaque extrêmité à des montants mobiles 15 portant eux-mêmes à leurs extrêmités des blocs de glissement 16, capables de glisser dans des traverses fixes 17 supportées par des pieds 18.

Des vérins pneumatiques ou mécaniques 19 à double effet agissent sur les blocs de glissement pour les pousser ou les tirer avec les barres 14 et les cadres composites 10 respectivement pour sortir ces derniers tous ensemble du filtre-presse ou pour rentrer l'ensemble de ces cadres composites dans le filtre.

Les gâteaux sont expulsés des cadres composites, par des membranes expansibles formant parties constitutives du cadre composite.

Sur le côté gauche de chaque cadre composite (considérant la Fig 2) ou encore sur le côté des cadres composites les plus proches du filtre après leur sortie est fixée une tuyauterie 20 perforée de nombreux trous, reliée par un flexible et un collecteur (non représentés) à une alimentation en liquide de lavage des tissus, qui sera pulvérisé après décharge des gâteaux, durant la rétraction des cadres composites dans le filtre, dans le direction opposée à celle de la flèche Y.

Durant a dite rétractation, au moins deux pulvérisateurs 20a réglables, fixés dans le haut au dessus de chaque plateau projettent contre les deux faces externes de deux cadres composites un jet mince vertical de liquide de lavage des surfaces de contact. D'autres pulvérisateurs 20a peuvent être fixés sous les plateaux pour agir de même.

Entre les plateaux d'une part et les cadres composites de l'autre existent des organes distanceurs, qui amènent à l'ouverture du filtre, en vue de sor tir les cadres composites du filtre, dans la direction de la flèche Y, vers la position d'évacuation des gâteaux.

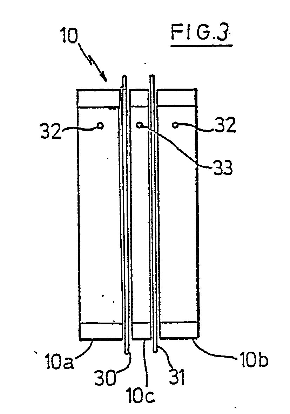

Comme la représente la Fig 3, chaque cadre composite 10 comprend successivement un premier cadre simple 10a, une première membrane expansible 30, une chambre centrale 10c, une seconde membrane 31 et un second cadre simple 10b. La bouille à filtrer est introduite par les entrées 32 des cadres simples 10a et 10b. Après la sortie des cadres composites contenant les gâteaux filtrés, un fluide sous pression est introduit dans la chambre centrale 10c, par l'entrée 33.

Par la conception du cadre composite, les membranes qui sont de simples feuilles de caoutchouc ou autre matière élastique, par expansion vers l'extérieur poussent les gâteaux hors des cadres simples 10/ et 10b, soit deux gâteaux par cadre composite.

En fait, le rôle de ces membranes est triple: précomprimer les gâteaux avant leur lavage, les comprimer fortement après lavage, les expulser des cadres composites dont elles sont partie intégrante.

Remarquons aussi comme avantage important du filtre, que les gâteaux filtrés sont expulsés dans une zône qui leur est propre, tandis que les liquides de lavage des tissus tombent dans une autre zône.

Toutes les opérations du filtre sont totalement automatisées.

## Revendications

1. Un filtre-presse à axe horizontal comprenant, dans une ossature de résistance, une pluralité de plateaux verticaux mobiles dans la direction dudit axe et portant un tissu filtrant sur chaque face, caractérisé en ce que, entre les deux plateaux (11) de chaque paire de plateaux adjacents est inséré un cadre composite (10) mobile dans la direction de l'axe précité et perpendiculairement à cet axe, ce cadre composite étant constitué par l'assemblage d'un premier cadre simple (10a, fig. 3), d'une première membrane expansible (30), d'une chambre centrale (10c), d'une seconde membrane expansible (31) et d'un second cadre simple (10b), en ce que les plateaux (11) et les cadres composites (10) sont munis chacun d'au moins deux coussinets fermés (12,13) pouvant coulisser sur des barres ou tirants de guidage horizontaux (7,14), de manière à maintenir en permanence ces plateaux (11) et ces cadres composites (10) verticaux et parallèles entre eux, les barres (14) sur lesquelles peuvent coulisser les coussinets fermés (13) portés par les cadres composites (10) étant fixés à des montants mobiles (15) dans une direction perpendiculaire à l'axe du filtre depuis une première position où les cadres composites (10) sont insérés entre les plateaux (11) jusqu'à une seconde position où les cadres composites (10) sont entièrement sortis du filtre et où les deux gâteaux de filtration que contient chaque cadre composite (10) sont expulsés par l'expansion des deux membranes (30,31) de chaque cadre composite (10), ainsi que depuis la seconde position précitée jusqu'à la première précitée, et en ce qu'au moins une tuyauterie perforée (20) est fixée à chaque cadre composite (10) pour permettre le lavage des tissus filtrants des plateaux (11), tandis qu'au moins un pulvérisateur de liquide (20a) est fixé au-dessus ou en dessous de chaque plateau (11) de manière à permettre le lavage des surfaces de contact des cadres composites (10).

2. Un filtre-presse suivant la revendication 1, caractérisé en ce que lesdits montants mobiles (15) sont munis à leurs extrémités de blocs de glissement (16) pouvant glisser dans des traverses fixes (17) sous l'effet d'un vérin (19) à double effet permettant de sortir la pluralité de cadres composites (10) du filtre et de ramener cette pluralité de cadres composites (10) dans le filtre.

3. Un filtre-presse suivant la revendication 1, caractérisé en ce que lesdites tuyauteries perforées (20) sont chacune fixées à chaque cadre composite (10) sur le côté de celui-ci le plus proche de l'axe du filtre, lorsque ce cadre composite (10) a été amené dans ladite seconde position.

4. Un filtre-presse suivant la revendication 1, caractérisé en ce que les pulvérisateurs de liquide (20a) sont montés au voisinage du côté de chaque plateau (11), qui est le plus proche du cadre composite (10) adjacent à ce plateau (11), lorsque ce cadre composite (10) est dans ladite seconde position, au-dessus et/ou en dessous de chaque plateau (11).

**Patentansprüche**

1. Filterpresse mit horizontaler Achse, umfassend eine Vielzahl von in Richtung dieser Achse beweglichen und auf jeder Seite ein Filtergewebe tragenden vertikalen Platten, dadurch gekennzeichnet, daß zwischen den zwei Platten (11) eines jeden Paares benachbarter Platten ein in Richtung der genannten Achse und zu dieser Achse senkrecht beweglicher Verbundrahmen (10) eingesetzt ist, welcher Verbundrahmen durch Zusammenfügen eines ersten einfachen Rahmens (10a, Fig. 3), einer ersten dehnbaren Membran (30), einer zentralen Kammer (10c), einer zweiten dehnbaren Membran (31) und eines zweiten einfachen Rahmens (10b) gebildet ist; daß die Platten (11) und die Verbundrahmen (10) jeweils mit zumindest zwei Augenlagern (12, 13) versehen sind, die zum permanenten Halten dieser Platten (11) und dieser Verbundrahmen (10) vertikal und zueinander parallel auf horizontalen Führungsstangen oder -balken (7, 14) gleitbar sind, wobei die Stangen (14), auf welchen die von den Verbundrahmen (10) getragenen Augenlager (13) gleiten können, an Ständern (15) befestigt sind, die in einer zur Achse des Filters senkrechten Richtung aus einer ersten Position, in der die Verbundrahmen (10) zwischen den Platten (11) eingesetzt sind, bis in eine zweite Position, in der die Verbundrahmen (10) vollkommen aus dem Filter entfernt sind und die in jedem Verbundrahmen (10) enthaltenen beiden Filterkuchen durch Dehnen der beiden Membranen (30, 31) jedes Verbundrahmens (10) ausgeworfen werden, sowie aus der zweiten Position in die erste Position bewegbar sind, und daß zumindest eine perforierte Rohrleitung (20) zwecks Waschens der Filtergewebe der Platten (11) an jedem Verbundrahmen (10) befestigt ist, während zumindest ein Flüssigkeitszerstäuber (20a) oberhalb oder unterhalb jeder Platte (11) zum Waschen der Kontaktflächen der Verbundrahmen (10) befestigt ist.

2. Filterpresse nach Anspruch 1, dadurch gekennzeichnet, daß die beweglichen Ständer (15) an ihren Enden mit Gleitblöcken (16) versehen sind, die unter der Wirkung eines doppelt beaufschlagbaren Zylinders (19) auf fixen Traversen (17) gleitbar sind, wodurch die Vielzahl an Verbundrahmen (10) aus dem Filter entfernbar und in den Filter einführbar sind.

3. Filterpresse nach Anspruch 1, dadurch gekennzeichnet, daß die perforierten Rohrleitungen (20) jeweils auf der Seite jedes Verbundrahmens (10) befestigt sind, welcher der Achse des Filters am nächsten ist, wenn der Verbundrahmen (10) in die zweite Position gebracht ist.

4. Filterpresse nach Anspruch 1, dadurch gekennzeichnet, daß die Flüssigkeitszerstäuber (20a) nahe der Seite jeder Platte (11) montiert sind, die dem dieser Platte (11) angrenzenden Verbundrahmen (10) am nächsten ist, wenn dieser Verbundrahmen (10) in der zweiten Position ist, und zwar oberhalb und/oder unterhalb jeder Platte (11).

**Claims**

1. A filter press having a horizontal axis and comprising, in a resistant frame, a plurality of vertical plates which are movable in the direction of said axis and carry a filtering cloth on each face, characterized in that between the two plates (11) of each pair of adjacent plates is inserted a composite frame (10) which is movable in the direction of said axis and perpendicularly thereto, this composite frame being formed by the assembly of a first simple frame (10a, fig. 3), of a first expansible membrane (30), of a central chamber (10c), of a second expansible membrane (31) and of a second simple frame (10b), in that the plates (11) and the composite frames (10) are each provided with at least two closed bearings (12, 13) which may slide onto horizontal guiding bars or ties (7, 14), so as to maintain said plates (11) and said composite frames (10) vertical and parallel to each other, the bars (14) onto which the closed bearings (13) carried by the composite frames (10) can slide being fixed to uprights (15) which are movable in a direction perpendicular to the axis of the filter, from a first position in which the composite frames (10) are inserted between the plates (11) to a second position in which the composite frames (10) are entirely withdrawn from the filter and in which the filtering cakes contained in each composite frame (10) are expelled by the expansion of the two membranes (30,31) from each composite frame (10), as well as from said second position to said first position, and in that at least one perforated pipe (20) is fixed to each composite frame (10) so as to allow the washing of the filtering cloths of the plates (11), whereas at least a liquid sprayer (20a) is fixed above or below each plate (11), so as to enable the washing of the contacting surfaces of the composite frames (10).

2. A filter press according to claim 1, characterized in that said movable uprights (15) are provided at their ends with sliding blocks (16) which may slide into fixed cross beams (17) under the action of a double acting jack (19), allowing to withdraw the plurality of composite frames (10) from the filter and to bring said plurality of composite frames (10) back into the filter.

3. A filter press according to claim 1, characterized in that said perforated pipes (20) are each fixed to each composite frame (10) on the side thereof which is nearest to the axis of the filter, when said composite frame (10) has been brought into said second position.

4. A filter press according to claim 1, characterized in that the liquid sprayers (20a) are mounted near the side of each plate (11) which is nearest to the composite frame (10) adjacent to this plate (11), when said composite frame (10) is in said second position, above and/or below each plate (11).

FIG. 1

FIG. 2

FIG.3